(19) Europäisches Patentamt
European Patent Office
Office européen des brevets

(11) **EP 2 471 583 B1**

(12) **EUROPEAN PATENT SPECIFICATION**

(45) Date of publication and mention
of the grant of the patent:
**18.11.2020 Bulletin 2020/47**

(21) Application number: **11160191.0**

(22) Date of filing: **29.03.2011**

(51) Int Cl.:
*A63F 13/525* *(2014.01)*     *A63F 13/26* *(2014.01)*
*A63F 13/5252* *(2014.01)*

(54) **Display control program, display control method, and display control system**

Anzeigesteuerungsprogramm, Anzeigesteuerungsverfahren und Anzeigesteuerungssystem

Système, procédé et programme de contrôle d'affichage

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2010 JP 2010294536**

(43) Date of publication of application:
**04.07.2012 Bulletin 2012/27**

(73) Proprietor: **Nintendo Co., Ltd.
Kyoto 601-8501 (JP)**

(72) Inventors:
• **Nakano, Takao**
  **Kyoto 601-8501 (JP)**
• **Yoshihara, Kazuki**
  **Kyoto 601-8501 (JP)**
• **Onishi, Yoshiaki**
  **Kyoto 601-8501 (JP)**
• **Mihara, Ichirou**
  **Tokyo 141-0031 (JP)**
• **Okubo, Tadanobu**
  **Tokyo 141-0031 (JP)**

(74) Representative: **Lang, Johannes
Bardehle Pagenberg Partnerschaft mbB
Patentanwälte, Rechtsanwälte
Prinzregentenplatz 7
81675 München (DE)**

(56) References cited:
**EP-A2- 0 751 689     EP-A2- 2 257 075**

• **"The Geometry of Perspective Projection", , 13
March 2003 (2003-03-13), XP055120609,
Retrieved from the Internet:
URL:http://www.cse.unr.edu/~bebis/CS791E/N
otes/PerspectiveProjection.pdf [retrieved on
2014-05-28]**
• **Anonymous: "Dolly zoom - Wikipedia, the free
encyclopedia", , 14 December 2010 (2010-12-14),
XP055120579, Retrieved from the Internet:
URL:http://en.wikipedia.org/w/index.php?ti
tle=Dolly_zoom&oldid=402416303 [retrieved on
2014-05-28]**
• **STANLEY COREN ET AL: "Screening for
Stereopsis without the Use of Technical
Equipment: Scale Development and
Cross-Validation", INTERNATIONAL JOURNAL
OF EPIDEMIOLOGY, vol. 25, no. 1, 1 January 1996
(1996-01-01), pages 146-152, XP055120351, ISSN:
0300-5771, DOI: 10.1093/ije/25.1.146**

**Description**

CROSS REFERENCE TO RELATED APPLICATION

The disclosure of Japanese Patent Application No.2010-294536, filed on December 29, 2010, is incorporated herein by reference.

BACKGROUND OF THE INVENTION

Field of the Invention

The present invention relates to a display control program, a display control method, and a display control system. The present invention particularly relates to a display control program, a display control method, and a display control system for performing stereoscopically visible display.

Description of the Background Art

There is a known conventional method for performing stereoscopic display by using two images having parallax therebetween. For example, Japanese Laid-Open Patent Publication No. 2003-107603 discloses a technique for performing stereoscopic display, in which technique two virtual cameras are set within a three dimensional virtual space and images including subjects for the respective virtual cameras such as virtual objects are rendered based on the virtual cameras.

In the technique disclosed in Japanese Laid-Open Patent Publication No. 2003-107603, the stereoscopic effect can be enhanced by increasing a distance between the two virtual cameras. The stereoscopic display can be switched to planar display by setting the distance between the two virtual cameras to 0. The rendering is performed by using the same virtual cameras regardless of whether the display is stereoscopic display or planar display.

Document EP0751689A2 discloses the stereoscopic CG image generating apparatus and a stereoscopic TV apparatus, having a projection transformation section which, based on three-dimensional structural information describing a three-dimensional shape of an object, generates a plurality of two-dimensional projection models as viewed from a plurality of viewpoints, a distance information extraction section which generates a camera-to-object distance information used for calculations in the projection transformation section, and a camera parameter determining section which, based on the output of the distance information extraction section, the screen size of a stereoscopic image display device for displaying finally generated two-dimensional projection models, and a viewer's viewing distance, determines camera parameters so that stereoscopic CG images will be brought within the viewer's binocular fusional range. According to the thus constructed stereoscopic CG image generating apparatus and stereoscopic TV apparatus, proper camera parameters (focal length or field of view, camera spacing, and converging point) are determined based on the camera-to-object distance information, the magnitude of parallax of the generated stereoscopic CG images on the display device (or in a window on the display screen), and the viewing distance, so that easy-to-view stereoscopic CG images are automatically generated regardless of the display size, and by horizontally translating left-eye and right-eye images, binocular parallax of displayed images is automatically brought within the viewer's binocular fusional range regardless of the size of a stereoscopic display used.

SUMMARY OF THE INVENTION

A main object of the present invention is to provide a display control program, a display control method, and a display control system, as set out in the appended set of claims. The embodiments of the following description which are not covered by the appended claims are considered as not being part of the present invention. Any "example", "aspect" or "embodiment" of the description not falling within the scope of the claims does not form part of the invention and is provided for illustrative purposes only.

In one configuration example of a display control program the display control program causes a computer of a display control apparatus to act as: adjustment means for adjusting a degree of stereopsis; virtual camera control means for setting an angle of view of a virtual camera in accordance with the degree of stereopsis adjusted by the adjustment means; and rendering means for rendering a virtual object placed in a virtual space, based on the virtual camera of which the angle of view has been set by the virtual camera control means.

It should be noted that the term "degree of stereopsis" refers to the degree of effect by which a user feels, when viewing a screen, that the virtual space extends in a direction perpendicular to the screen.

According to the above configuration example, when the degree of stereopsis is changed, the angle of view of the virtual camera is changed and the virtual object placed in the virtual space is rendered with the changed angle of view. In this manner, a change in stereoscopic effect can be accentuated by a change in the angle of view of the virtual camera.

As another configuration example, the virtual camera control means may set the angle of view of the virtual camera to a first angle of view if the degree of stereopsis is adjusted to a first value by the adjustment means, and set the angle of view of the virtual camera to a second angle of view if the degree of stereopsis is adjusted to a second value by the adjustment means. Moreover, the rendering means may render a stereoscopically visible image if the angle of view of the virtual camera is set to the first angle of view by the virtual camera control means, and render a planarly visible image if the angle of view of the virtual camera is set to the second angle of view by the virtual camera control means.

As another further configuration example, the first value may be greater than the second value, and the first angle of view may be greater than the second angle of view.

As another further configuration example, the virtual camera control means may increase the angle of view of the virtual camera in accordance with an increase in the degree of stereopsis adjusted by the adjustment means.

As another further configuration example, the virtual camera control means may change a distance between a pair of virtual cameras in accordance with the degree of stereopsis adjusted by the adjustment means, and the rendering means may render a stereoscopically visible image by rendering, based on the pair of virtual cameras, an image for left eye and an image for right eye, in each of which the virtual object is captured.

As another further configuration example, the virtual camera control means may increase the distance between the pair of virtual cameras in accordance with an increase in the degree of stereopsis adjusted by the adjustment means.

As another further configuration example, the pair of virtual cameras may each be a perspective-projection virtual camera. If the degree of stereopsis is adjusted to a minimum value by the adjustment means, the virtual camera control means may set the angle of view of each of the pair of perspective-projection virtual cameras to a minimum value such that the angle of view is set close to an angle of view for orthogonal projection, and set the distance between the pair of perspective-projection virtual cameras to zero or a value close to zero.

As another further configuration example, the virtual camera control means may change a distance from the virtual object to the virtual camera in accordance with the degree of stereopsis adjusted by the adjustment means.

As another further configuration example, the virtual camera control means may move the virtual camera, such that the greater the degree of stereopsis adjusted by the adjustment means, the closer the virtual camera is to the virtual object.

In one configuration example of a display control method the display control method includes: an adjustment step of adjusting a degree of stereopsis; a virtual camera control step of setting an angle of view of a virtual camera in accordance with the degree of stereopsis adjusted in the adjustment step; and a rendering step of rendering a virtual object placed in a virtual space, based on the virtual camera of which the angle of view has been set in the virtual camera control step.

In one configuration example of a display control system the display control system includes: adjustment means for adjusting a degree of stereopsis; virtual camera control means for setting an angle of view of a virtual camera in accordance with the degree of stereopsis adjusted by the adjustment means; and rendering means for rendering a virtual object placed in a virtual space, based on the virtual camera of which the angle of view has been set by the virtual camera control means.

In another configuration example of the display control program, the display control program causes a computer of a display control apparatus to act as: adjustment means for adjusting a degree of stereopsis; virtual camera control means for setting a type of virtual camera in accordance with the degree of stereopsis adjusted by the adjustment means; and rendering means for rendering a virtual object placed in a virtual space, based on the virtual camera of which the type has been set by the virtual camera control means.

As another configuration example, the virtual camera control means may set a first virtual camera if the degree of stereopsis is adjusted to a first value by the adjustment means, and set a second virtual camera which is a different type of virtual camera from the first virtual camera if the degree of stereopsis is adjusted to a second value by the adjustment means. Moreover, the rendering means may render, based on the first virtual camera, a stereoscopically visible image in which the virtual object is captured, and render, based on the second virtual camera, a planarly visible image in which the virtual object is captured.

It should be noted that the term "stereoscopically visible image" refers to an image that is generated to show a virtual object in a stereoscopic manner (i.e., in a manner that allows a user to feel as if the virtual object was placed at the front or at the back of the screen), such that the user can view the virtual object with naked eyes or through glasses or head-mounted display. Typically, the term "stereoscopically visible image" refers to multiple images that are obtained by rendering a virtual object with respective different viewpoints, or refers to an image that results from combining such multiple images. The term "planarly visible image" refers to an image that is generated to show a virtual object in a planar manner (i.e., in a manner that does not make the user feel as if the virtual object was placed at the front or at the back of the screen).

According to the above configuration example, rendering of a planarly visible image and rendering of a stereoscopically visible image are performed by using different types of virtual cameras, respectively. For example, a difference in appearance between a planarly visible image and a stereoscopically visible image can be accentuated by changing the type of virtual camera to be used.

As another further configuration example, the virtual camera control means may set a perspective-projection virtual camera if the degree of stereopsis is adjusted to the first value by the adjustment means, and set one of an orthogonal-projection virtual camera and a pseudo orthogonal-projection virtual camera if the degree of stereopsis is adjusted to the second value by the adjustment means. Moreover, the rendering means may render, based on the perspective-projection virtual camera, a stereoscopically visible image in which the virtual object is captured, and render, based on one of the orthogonal-projection virtual camera and the pseudo orthogonal-projection virtual camera, a planarly visible image in which the virtual object is captured.

According to the above configuration example, in the case of rendering a stereoscopically visible image, a perspective-projection virtual camera is used, whereas in the case of rendering a planarly visible image, an orthogonal-projection virtual camera or a pseudo orthogonal-projection virtual camera (i.e., a perspective-projection virtual camera of which the angle of view is similar to one for orthogonal projection) is used. Accordingly, the stereoscopic effect that is obtained in a case where a stereoscopically visible image is displayed is much greater than that obtained in a case where a planarly visible image is displayed. Assume, for example, a case where existing application software (such as a game program) capable of planar display for displaying an image that is generated based on an orthogonal-projection virtual camera is upgraded into application software capable of both planar display and stereoscopic display. In the case of such upgraded application software, the planar display may maintain the way the images look in the existing application software, and the stereoscopic display may allow a user to feel the sense of depth realized by perspective projection in addition to the sense of depth realized by parallax. In this manner, the stereoscopic effect can be accentuated.

As another further configuration example, the first value may be greater than the second value.

As another further configuration example, the virtual camera control means may set an angle of view of the perspective-projection virtual camera in accordance with the degree of stereopsis adjusted by the adjustment means, and the rendering means may render, based on the perspective-projection virtual camera of which the angle of view has been set by the virtual camera control means, a stereoscopically visible image in which the virtual object is captured.

As another further configuration example, the virtual camera control means may set an angle of view of the perspective-projection virtual camera to a minimum value if the degree of stereopsis is adjusted to a minimum value by the adjustment means, such that the angle of view of the perspective-projection virtual camera is set close to an angle of view for orthogonal projection, and increase the angle of view of the perspective-projection virtual camera in accordance with an increase in the degree of stereopsis adjusted by the adjustment means.

According to the above configuration example, if, for example, a user adjusts the degree of stereopsis by gradually increasing it to a desired degree, the angle of view of the virtual camera changes smoothly. Therefore, the appearance of a displayed image does not suddenly change, which allows the user to perform the adjustment comfortably.

As another further configuration example, the virtual camera control means may set a distance between a pair of perspective-projection virtual cameras in accordance with the degree of stereopsis adjusted by the adjustment means, and the rendering means may render a stereoscopically visible image by rendering, based on the pair of perspective-projection virtual cameras, an image for left eye and an image for right eye, in each of which the virtual object is captured.

As another further configuration example, if the degree of stereopsis is adjusted to the first value by the adjustment means, the rendering means may render a stereoscopically visible image by rendering, based on a pair of perspective-projection virtual cameras, an image for left eye and an image for right eye, in each of which the virtual object is captured, and if the degree of stereopsis is adjusted to the second value by the adjustment means, the rendering means may render, based on a single orthogonal-projection virtual camera, a planarly visible image in which the virtual object is captured.

As another further configuration example, the virtual camera control means may increase a distance between the pair of perspective-projection virtual cameras in accordance with an increase in the degree of stereopsis adjusted by the adjustment means.

As another further configuration example, the virtual camera control means may change a distance from the virtual object to the virtual camera in accordance with the degree of stereopsis adjusted by the adjustment means.

As another further configuration example, the virtual camera control means may move the virtual camera, such that the greater the degree of stereopsis adjusted by the adjustment means, the closer the virtual camera is to the virtual object.

In another configuration example of the display control method, the display control method includes: an adjustment step of adjusting a degree of stereopsis; a virtual camera control step of setting a type of virtual camera in accordance with the degree of stereopsis adjusted in the adjustment step; and a rendering step of rendering a virtual object placed in a virtual space, based on the virtual camera of which the type has been set in the virtual camera control step.

In another configuration example of the display control system, the display control system includes: adjustment means for adjusting a degree of stereopsis; virtual camera control means for setting a type of virtual camera in accordance with the degree of stereopsis adjusted by the adjustment means; and rendering means for rendering a virtual object placed in a virtual space, based on the virtual camera of which the type has been set by the virtual camera control means.

The present invention provides a display control program, a display control method, and a display control system, as set out in the appended set of claims.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a front view of a game apparatus 10 in an opened state;
FIG. 2A is a left side view of the game apparatus 10 in a closed state;
FIG. 2B is a front view of the game apparatus 10 in the closed state;
FIG. 2C is a right side view of the game apparatus 10 in the closed state;
FIG. 2D is a rear view of the game apparatus 10 in the closed state;
FIG. 3A shows a state where a slider 25a of a 3D adjustment switch 25 is located at the lowermost position (a third position);
FIG. 3B shows a state where the slider 25a of the 3D adjustment switch 25 is located (at a first position) above the lowermost position;
FIG. 3C shows a state where the slider 25a of the 3D adjustment switch 25 is located at the uppermost position (a second position);
FIG. 4 is a block diagram showing an internal configuration of the game apparatus 10;
FIG. 5 shows an example of a game image in a planar display mode;
FIG. 6 shows a virtual camera in the case of generating a planarly visible image;
FIG. 7 shows an example of a game image in a case where a 3D volume value is the maximum value;
FIG. 8 shows virtual cameras in the case of generating a stereoscopically visible image;
FIG. 9 shows a rider that is recognized by a user and the depth position of spectator stands in a case where the 3D volume value is the maximum value;
FIG. 10 is an example of a game image in a case where the 3D volume value is substantially the middle value between the minimum value and the maximum value;
FIG. 11 shows the rider that is recognized by the user and the depth position of the spectator stands in the case where the 3D volume value is substantially the middle value between the minimum value and the maximum value;
FIG. 12 shows correspondence relationships among the 3D volume value, the angle of view of the virtual cameras, and the distance between the virtual cameras;
FIG. 13 shows an example of images for left eye and images for right eye that are generated in accordance with 3D volume values;
FIG. 14 is a memory map of a main memory 32; and
FIG. 15 is a flowchart showing operations of the game apparatus 10.

DESCRIPTION OF THE PREFERRED EMBODIMENTS

(Configuration of game apparatus)

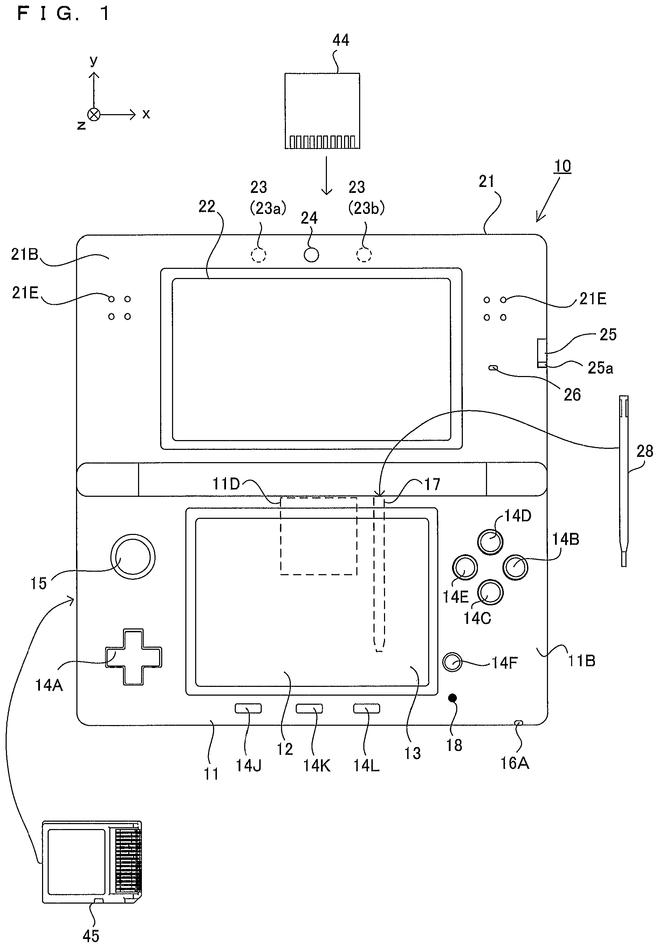

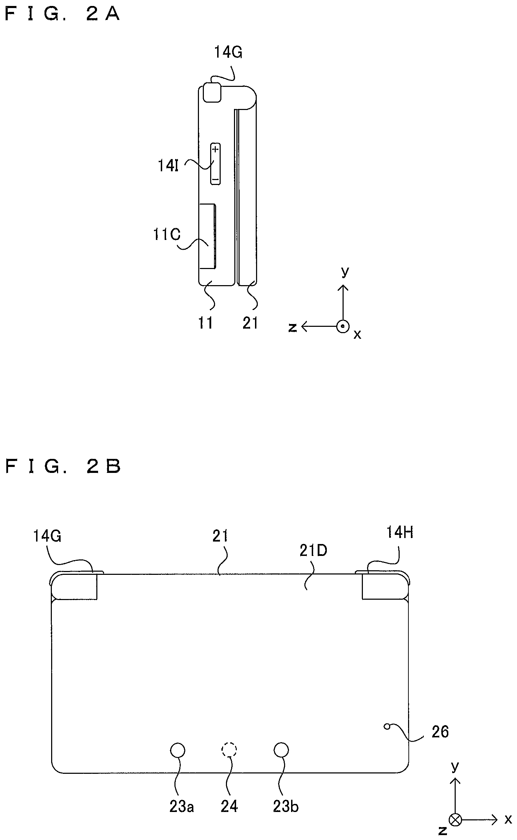

Hereinafter, a game apparatus according to one embodiment of the present invention will be described. FIG. 1 and FIG. 2A to 2D are each a plan view showing an outer appearance of a game apparatus 10. The game apparatus 10 is a hand-held game apparatus, and is configured to be foldable as shown in FIG. 1 and FIG. 2A to 2D. FIG. 1 shows the game apparatus 10 in an opened state, and FIG. 2A to 2D show the game apparatus 10 in a closed state. FIG. 1 is a front view of the game apparatus 10 in the opened state. The game apparatus 10 is capable of capturing an image by means of an imaging section, displaying the captured image on a screen, and storing data of the captured image. The game apparatus 10 is also capable of executing a game program that is stored in an exchangeable memory card or a game program that is received from a server or another game apparatus, and displaying on the screen an image generated by computer graphics processing, such as an image captured by a virtual camera set in a virtual space.

Initially, an external structure of the game apparatus 10 will be described with reference to FIG. 1 and FIG. 2A to FIG. 2D. The game apparatus 10 includes a lower housing 11 and an upper housing 21 as shown in FIG. 1 and FIG. 2A to FIG. 2D. The lower housing 11 and the upper housing 21 are connected to each other so as to be openable and closable (i.e., foldable).

(Description of lower housing)

Initially, a structure of the lower housing 11 will be described. As shown in FIG. 1 and FIG. 2A to 2D, the lower housing 11 includes a lower LCD (Liquid Crystal Display) 12, a touch panel 13, operation buttons 14A to 14L, an analog stick 15, an LED 16A and an LED 16B, an insertion opening 17, and a microphone hole 18. Hereinafter, these components will be described in detail.

As shown in FIG. 1, the lower LCD 12 is accommodated in the lower housing 11. The number of pixels of the lower LCD 12 may be, for example, 320 dots × 240 dots (the horizontal line × the vertical line). The lower LCD 12 is a display device for displaying an image in a planar manner (not in a stereoscopically visible manner), which is different from an upper LCD 22 described below. Although an LCD is used as a display device in the present embodiment, any other display device such as a display device utilizing EL (Electro Luminescence) may be used, for example. In addition, a display device having any resolution may be used as the lower LCD 12.

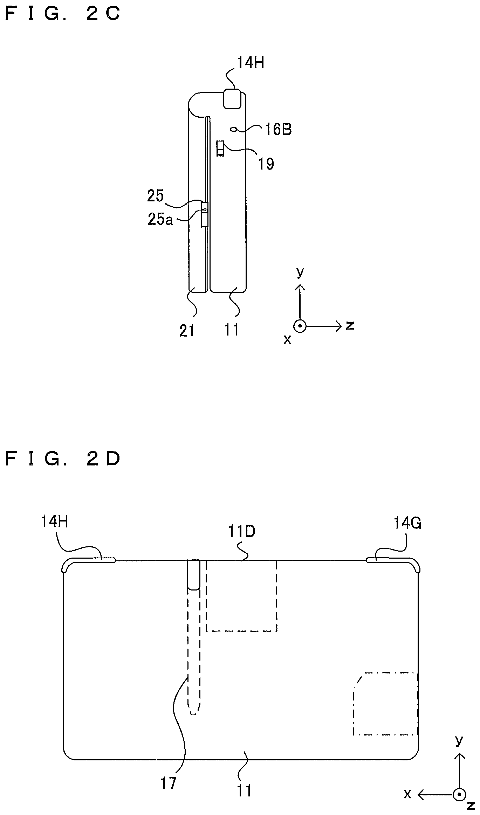

As shown in FIG. 1, the game apparatus 10 includes the touch panel 13 as an input device. The touch panel 13 is mounted on the screen of the lower LCD 12. In the present embodiment, a resistive film type touch panel is used as the touch panel 13. However, the touch panel 13 is not limited to a resistive film type touch panel, but may be any type of touch panel. For example, a touch panel of electrostatic capacitance type may be used as the touch panel 13. In the present embodiment, the touch panel 13 has the same resolution (detection accuracy) as that of the lower LCD 12. However, the resolution of the touch panel 13 and the resolution of the lower LCD 12 need not be the same. The insertion opening 17 (indicated by dashed lines in FIG. 1 and FIG. 2D) is provided in the upper side surface of the lower housing 11. The insertion opening 17 may be used for accommodating a stylus pen 28 which is used for performing an operation on the touch panel 13. Although an input on the touch panel 13 is usually performed by using the stylus pen 28, a finger of a user may be used for performing an input on the touch panel 13, in addition to the stylus pen 28.

The operation buttons 14A to 14L are each an input device for performing a predetermined input. As shown in FIG. 1, among the operation buttons 14A to 14L, a cross button 14A (a direction input button 14A), a button 14B, a button 14C, a button 14D, a button 14E, a power button 14F, a selection button 14J, a HOME button 14K, and a start button 14L are provided at the inner side surface (the main surface) of the lower housing 11. The cross button 14A is cross-shaped, and includes buttons for indicating up, down, left, right directions. The buttons 14A to 14E, the selection button 14J, the HOME button 14K, and the start button 14L are assigned respective functions, as necessary, in accordance with a program executed by the game apparatus 10. For example, the cross button 14A is used for selection operation and the like, and the operation buttons 14B to 14E are used for, for example, determination operation and cancellation operation. The power button 14F is used for powering the game apparatus 10 on/off.

The analog stick 15 is a device for indicating a direction. The analog stick 15 has a keytop which is configured to slide parallel to the inner side surface of the lower housing 11. The analog stick 15 acts in accordance with a program executed by the game apparatus 10. For example, when a game in which a predetermined object appears in a three-dimensional virtual space is executed by the game apparatus 10, the analog stick 15 acts as an input device for moving the predetermined object in the three-dimensional virtual space. In this case, the predetermined object moves in a direction in which the keytop of the analog stick 15 is slid. It should be noted that any component that enables an analog input by being tilted by a predetermined amount in any direction among up, down, left, right, and diagonal directions may be used as the analog stick 15.

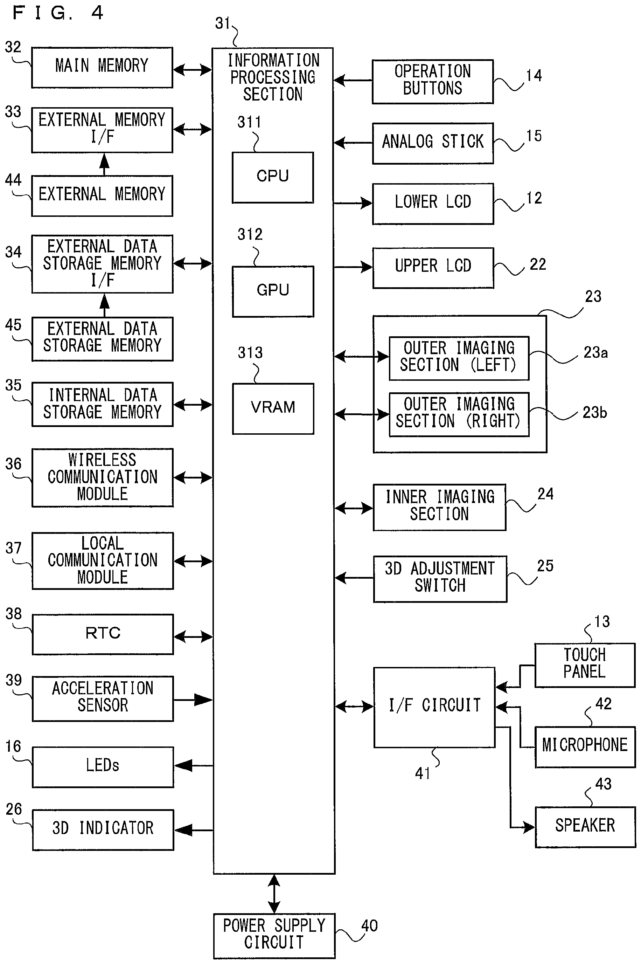

Further, the microphone hole 18 is provided in the inner side surface of the lower housing 11. Under the microphone hole 18, a microphone 42 (see FIG. 4), which will be described below, is provided as a sound input device, and the microphone 42 detects a sound from the outside of the game apparatus 10.

FIG. 2A is a left side view of the game apparatus 10 in the closed state. FIG. 2B is a front view of the game apparatus 10 in the closed state. FIG. 2C is a right side view of the game apparatus 10 in the closed state. FIG. 2D is a rear view of the game apparatus 10 in the closed state. As shown in FIG. 2B and FIG. 2D, an L button 14G and an R button 14H are provided at the upper side surface of the lower housing 11. The L button 14G and the R button 14H can act as as shutter buttons (image capturing instruction buttons) of the imaging section, for example. Further, as shown in FIG. 2A, a sound volume button 141 is provided at the left side surface of the lower housing 11. The sound volume button 141 is used for adjusting the sound volume of a speaker of the game apparatus 10.

As shown in FIG. 2A, a cover 11C is provided at the left side surface of the lower housing 11 in an openable and closable manner. Inside the cover 11C, a connector (not shown) is provided for electrically connecting between the game apparatus 10 and an external data storage memory 45. The external data storage memory 45 is detachably attached to the connector. The external data storage memory 45 is used for, for example, saving (storing) data of an image captured by the game apparatus 10.

As shown in FIG. 2D, an insertion opening 11D, through which an external memory 44 having a game program stored therein is inserted, is provided at the upper side surface of the lower housing 11. A connector (not shown) for electrically connecting between the game apparatus 10 and the external memory 44 in a detachable manner is provided inside the insertion opening 11D. A predetermined game program is executed when the external memory 44 is connected to the game apparatus 10.

As shown in FIG. 1 and FIG. 2C, a first LED 16A for notifying the user of the power ON/OFF state of the game apparatus 10 is provided at the lower side surface of the lower housing 11, and a second LED 16B for notifying the user whether wireless communication of the game apparatus 10 is currently established is provided at the right side surface of the lower housing 11. The game apparatus 10 is capable of performing wireless communication with other devices, and the second LED 16B is lit up while the wireless communication is established. The game apparatus 10 has a function of connecting to a wireless LAN by a method compliant with, for example, IEEE 802.11b/g standard. A wireless switch 19 for enabling/disabling the wireless communication function is provided at the right side surface of the lower housing 11 (see FIG. 2C).

A rechargeable battery (not shown) which is the power source for the game apparatus 10 is accommodated in the lower housing 11, and the battery can be charged through a terminal provided at a side surface (for example, the upper side surface) of the lower housing 11.

(Description of upper housing)

Next, a structure of the upper housing 21 will be described. As shown in FIG. 1 and FIG. 2A to FIG. 2D, the upper housing 21 includes the upper LCD (Liquid Crystal Display) 22, an outer imaging section 23 (an outer imaging section (left) 23a and an outer imaging section (right) 23b), an inner imaging section 24, a 3D adjustment switch 25, and a 3D indicator 26. Hereinafter, theses components will be described in detail.

As shown in FIG. 1, the upper LCD 22 is accommodated in the upper housing 21. The number of pixels of the upper LCD 22 may be, for example, 800 dots × 240 dots (the horizontal line × the vertical line). Although in the present embodiment the upper LCD 22 is a liquid crystal display device, a display device utilizing EL (Electro Luminescence) or the like may be used instead. In addition, a display device having any resolution may be used as the upper LCD 22.

The upper LCD 22 is a display device capable of displaying a stereoscopically visible image. In the present embodiment, an image for left eye and an image for right eye are displayed by using substantially the same display area. Specifically, the upper LCD 22 may be a display device using a method in which the image for left eye and the image for right eye are alternately displayed in the horizontal direction in predetermined units (for example, every other line). Alternatively, a display device using a method in which the image for left eye and the image for right eye are alternately displayed for a predetermined time period may be used. Further, in the present embodiment, the upper LCD 22 is a display device capable of displaying an image which is stereoscopically visible with naked eyes. A lenticular lens type display device or a parallax barrier type display device is used for enabling the image for left eye and the image for right eye, which are alternately displayed in the horizontal direction, to be separately viewed by the left eye and the right eye, respectively. In the present embodiment, the upper LCD 22 of a parallax barrier type is used. The upper LCD 22 displays, by using the image for right eye and the image for left eye, an image (a stereoscopic image) which is stereoscopically visible with naked eyes. That is, the upper LCD 22 allows a user to view, by means of a parallax barrier, the image for left eye with the user's left eye and the image for right eye with the user's right eye. In this manner, a stereoscopic image (a stereoscopically visible image) exerting a stereoscopic effect for the user can be displayed. Further, the upper LCD 22 may disable the parallax barrier. When the parallax barrier is disabled, an image can be displayed in a planar manner (i.e., it is possible to display an image not in the above-described stereoscopically visible manner but in a planarly visible manner; specifically, a display mode is used in which the same displayed image is viewed by both left and right eyes). Thus, the upper LCD 22 is a display device capable of switching between a stereoscopic display mode for displaying a stereoscopically visible image and a planar display mode for displaying an image in a planar manner (i.e., for displaying a planarly visible image). The switching of the display mode is performed by the 3D adjustment switch 25, which will be described below.

Two imaging sections (23a and 23b) provided at the outer side surface (the back surface reverse of the main surface at which the upper LCD 22 is provided) 21D of the upper housing 21 are collectively referred to as the outer imaging section 23. Both directions in which the outer imaging section (left) 23a and the outer imaging section (right) 23b capture images, respectively, extend outward from the outer side surface 21D and are both normal to the outer side surface 21D. The outer imaging section (left) 23a and the outer imaging section (right) 23b can be used as a stereo camera in accordance with a program executed by the game apparatus 10. Each of the outer imaging section (left) 23a and the outer imaging section (right) 23b includes an imaging device (such as a CCD image sensor or a CMOS image sensor) having the same predetermined resolution, and a lens. The lens may have a zooming mechanism.

The inner imaging section 24 is provided at the inner side surface (the main surface) 21B of the upper housing 21, and acts as an imaging section which captures an image in a direction that extends inward from and normal to the inner side surface. The inner imaging section 24 includes an imaging device (such as a CCD image sensor and a CMOS image sensor) having a predetermined resolution, and a lens. The lens may have a zooming mechanism.

The 3D adjustment switch 25 is a slide switch, and is used for switching the display mode of the upper LCD 22 as described above. Further, the 3D adjustment switch 25 is used for adjusting the stereoscopic effect of a stereoscopically visible image (stereoscopic image) that is displayed on the upper LCD 22 (i.e., used for adjusting the degree of stereopsis). The 3D adjustment switch 25 has slider 25a which is slidable to any position in a predetermined direction (in the longitudinal direction along the right side surface). The display mode of the upper LCD 22 is set in accordance with the position of the slider 25a. Also, the appearance of a stereoscopic image in the display (i.e., the degree of stereopsis) is adjusted in accordance with the position of the slider 25a.

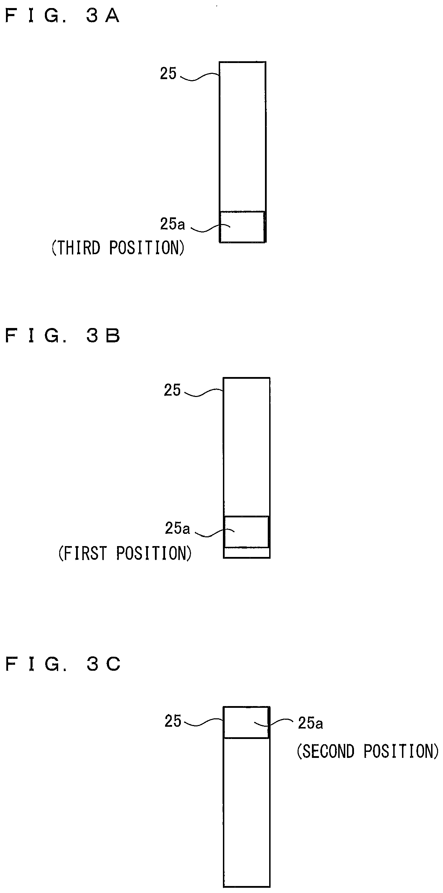

FIG. 3A to FIG. 3C show a state where the slider 25a of the 3D adjustment switch 25 slides. FIG. 3A shows a state where the slider 25a of the 3D adjustment switch 25 is located at the lowermost position (a third position). FIG. 3B is shows a state where the slider 25a of the 3D adjustment switch 25 is located (at a first position) above the lowermost position. FIG. 3C shows a state where the slider 25a of the 3D adjustment switch 25 is located at the uppermost position (a second position).

As shown in FIG. 3A, when the slider 25a of the 3D adjustment switch 25 is located at the lowermost position (the third position), the upper LCD 22 is set to the planar display mode, and a planarly visible image is displayed on the screen of the upper LCD 22 (here, the upper LCD 22 may remain set to the stereoscopic display mode, and a single image may be used as both the image for left eye and the image for right eye to perform planar display). On the other hand, when the slider 25a is located between the first position shown in FIG. 3B (i.e., the position above the lowermost position) and the second position shown in FIG. 3C (i.e., the uppermost position), the upper LCD 22 is set to the stereoscopic display mode. In this case, a stereoscopically visible image is displayed on the screen of the upper LCD 22. When the slider 25a is located between the first position and the second position, the appearance of a stereoscopic image is adjusted in accordance with the position of the slider 25a.

The 3D indicator 26 indicates whether the upper LCD 22 is in the stereoscopic display mode. The 3D indicator 26 is an LED, and is lit up when the stereoscopic display mode of the upper LCD 22 is enabled. The 3D indicator 26 may be lit up only in a case where program processing for displaying a stereoscopically visible image is performed when the upper LCD 22 is in the stereoscopic display mode.

Further, speaker holes 21E are formed in the inner side surface of the upper housing 21. A sound from a below-described speaker 43 is outputted through the speaker holes 21E.

(Internal configuration of game apparatus 10)

Next, an internal electrical configuration of the game apparatus 10 will be described with reference to FIG. 4. FIG. 4 is a block diagram showing an internal configuration of the game apparatus 10. As shown in FIG. 4, the game apparatus 10 includes, in addition to the components described above, electronic components such as an information processing section 31, a main memory 32, an external memory interface (external memory I/F) 33, an external data storage memory I/F 34, an internal data storage memory 35, a wireless communication module 36, a local communication module 37, a real-time clock (RTC) 38, an acceleration sensor 39, a power supply circuit 40, an interface circuit (I/F circuit) 41, and the like. These electronic components are mounted on an electronic circuit board, and accommodated in the lower housing 11 (or the upper housing 21).

The information processing section 31 is information processing means which includes a CPU (Central Processing Unit) 311 for executing a predetermined program, a GPU (Graphics Processing Unit) 312 for performing image processing, and the like. The CPU 311 of the information processing section 31 executes a program stored in a memory (for example, the external memory 44 connected to the external memory I/F 33 or the internal data storage memory 35) inside the game apparatus 10, thereby performing processing in accordance with the program. The program executed by the CPU 311 of the information processing section 31 may be obtained from another device through communication with the other device. The information processing section 31 further includes a VRAM (Video RAM) 313. The GPU 312 of the information processing section 31 generates an image in accordance with an instruction from the CPU 311 of the information processing section 31, and renders the image in the VRAM 313. The GPU 312 of the information processing section 31 outputs the image rendered in the VRAM 313, to the upper LCD 22 and/or the lower LCD 12, and the image is displayed on the upper LCD 22 and/or the lower LCD 12.

The main memory 32, the external memory I/F 33, the external data storage memory I/F 34, and the internal data storage memory 35 are connected to the information processing section 31. The external memory I/F 33 is an interface for detachably connecting to the external memory 44. The external data storage memory I/F 34 is an interface for detachably connecting to the external data storage memory 45.

The main memory 32 is volatile storage means used as a work area and a buffer area for (the CPU 311 of) the information processing section 31. That is, the main memory 32 temporarily stores various types of data used for the aforementioned processing based on a program, and temporarily stores a program obtained from the outside (i.e., from the external memory 44, another device, or the like), for example. In the present embodiment, for example, a PSRAM (Pseudo-SRAM) is used as the main memory 32.

The external memory 44 is nonvolatile storage means for storing a program executed by the information processing section 31. The external memory 44 is structured as, for example, a read-only semiconductor memory. When the external memory 44 is connected to the external memory I/F 33, the information processing section 31 can load a program stored in the external memory 44. Predetermined processing is performed when the program loaded by the information processing section 31 is executed. The external data storage memory 45 is structured as a non-volatile readable and writable memory (for example, a NAND flash memory), and is used for storing predetermined data. For example, images captured by the outer imaging section 23 and/or images captured by another device are stored in the external data storage memory 45. When the external data storage memory 45 is connected to the external data storage memory I/F 34, the information processing section 31 can load an image stored in the external data storage memory 45, and display the image on the upper LCD 22 and/or the lower LCD 12.

The internal data storage memory 35 is structured as a non-volatile readable and writable memory (for example, a NAND flash memory), and is used for storing predetermined data. For example, data and/or programs downloaded via the wireless communication module 36 by wireless communication are stored in the internal data storage memory 35.

The wireless communication module 36 has a function of connecting to a wireless LAN by a method compliant with, for example, IEEE 802.11b/g standard. The local communication module 37 has a function of performing wireless communication with the same type of game apparatus by a predetermined communication method (for example, communication based on a unique protocol or infrared communication). The wireless communication module 36 and the local communication module 37 are connected to the information processing section 31. The information processing section 31 can perform data transmission to and data reception from another device via the Internet by using the wireless communication module 36, and perform data transmission to and data reception from the same type of another game apparatus by using the local communication module 37.

The acceleration sensor 39 is connected to the information processing section 31. The acceleration sensor 39 detects magnitudes of acceleration (linear acceleration) in the directions of respective straight lines along three axes (xyz axes). The acceleration sensor 39 is provided inside the lower housing 11. In the acceleration sensor 39, as shown in FIG. 1, the direction along the longer sides of the lower housing 11 is defined as an x-axial direction, the direction along the shorter sides of the lower housing 11 is defined as a y-axial direction, and the direction perpendicular to the inner side surface (the main surface) of the lower housing 11 is defined as a z-axial direction. The acceleration sensor 39 detects the magnitudes of linear acceleration in the respective axial directions. The acceleration sensor 39 is, for example, an electrostatic capacitance type acceleration sensor. However, another type of acceleration sensor may be used. The acceleration sensor 39 may be an acceleration sensor for detecting the magnitude of acceleration in one axial direction or two-axial directions. The information processing section 31 is capable of detecting the orientation and motion of the game apparatus 10 by receiving data (acceleration data) that indicates acceleration detected by the acceleration sensor 39.

The RTC 38 and the power supply circuit 40 are connected to the information processing section 31. The RTC 38 counts time, and outputs the time to the information processing section 31. The information processing section 31 calculates the current time (date) based on the time counted by the RTC 38. The power supply circuit 40 controls power from the power source (i.e., the rechargeable battery accommodated in the lower housing 11 as described above) of the game apparatus 10, and supplies the power to each component of the game apparatus 10.

The I/F circuit 41 is connected to the information processing section 31. The microphone 42 and the speaker 43 are connected to the I/F circuit 41. Specifically, the speaker 43 is connected to the I/F circuit 41 through an amplifier which is not shown. The microphone 42 detects a voice uttered by a user, and outputs a sound signal to the I/F circuit 41, accordingly. The amplifier amplifies a sound signal from the I/F circuit 41, and a resultant sound is outputted from the speaker 43. The touch panel 13 is connected to the I/F circuit 41. The I/F circuit 41 includes a sound control circuit for controlling the microphone 42 and the speaker 43 (amplifier), and a touch panel control circuit for controlling the touch panel. For example, the sound control circuit performs A/D conversion and D/A conversion on sound signals, and also converts sound signals into a predetermined form of sound data. The touch panel control circuit generates a predetermined form of touch position data based on a signal outputted from the touch panel 13, and outputs the touch position data to the information processing section 31. The touch position data indicates coordinates of a position, on an input surface of the touch panel 13, at which an input has been performed. The touch panel control circuit reads a signal outputted from the touch panel 13 and generates touch position data once in every predetermined period. The information processing section 31 obtains the touch position data to recognize a position, on the touch panel 13, at which an input has been performed.

Operation buttons 14 include the above-described operation buttons 14A to 14L, and are connected to the information processing section 31. The operation buttons 14 output, to the information processing section 31, operation data indicating input states of the respective operation buttons 14A to 14L (i.e., indicating whether the operation buttons 14A to 14L have been pressed). The information processing section 31 obtains the operation data from the operation buttons 14 to perform processing in accordance with the inputs performed via the operation buttons 14.

The lower LCD 12 and the upper LCD 22 are connected to the information processing section 31. The lower LCD 12 and the upper LCD 22 each display an image in accordance with an instruction from (the GPU 312 of) the information processing section 31. In the present embodiment, the information processing section 31 causes the upper LCD 22 to display a stereoscopic image (i.e., a stereoscopically visible image).

Specifically, the information processing section 31 is connected to an LCD controller (not shown) of the upper LCD 22, and causes the LCD controller to set the parallax barrier to ON or OFF. When the parallax barrier is set to ON in the upper LCD 22, an image for right eye and an image for left eye, which are stored in the VRAM 313 of the information processing section 31, are outputted to the upper LCD 22. More specifically, the LCD controller alternately repeats reading of pixel data of the image for right eye for one line in the vertical direction, and reading of pixel data of the image for left eye for one line in the vertical direction, thereby reading, from the VRAM 313, the image for right eye and the image for left eye. Thus, an image to be displayed is divided into images for right eye and images for left eye, each of which is a rectangle-shaped image having one line of pixels aligned in the vertical direction. Then, an image, in which the rectangle-shaped images for right eye that are obtained through the division and the rectangle-shaped images for left eye that are obtained through the division are alternately arranged, is displayed on the screen of the upper LCD 22. A user views the image through the parallax barrier in the upper LCD 22, so that the images for right eye are viewed by the user's right eye and the images for left eye are viewed by the user's left eye. In this manner, a stereoscopically visible image is displayed on the screen of the upper LCD 22.

The outer imaging section 23 and the inner imaging section 24 are connected to the information processing section 31. The outer imaging section 23 and the inner imaging section 24 each capture an image in accordance with an instruction from the information processing section 31, and output data of the captured image to the information processing section 31.

The 3D adjustment switch 25 is connected to the information processing section 31. The 3D adjustment switch 25 transmits, to the information processing section 31, an electrical signal in accordance with the position of the slider 25a.

The 3D indicator 26 is connected to the information processing section 31. The information processing section 31 controls lighting-up of the 3D indicator 26. For example, the information processing section 31 lights up the 3D indicator 26 when the upper LCD 22 is in the stereoscopic display mode. The game apparatus 10 has the internal configuration as described above.

(Brief description of operations of game apparatus 10)

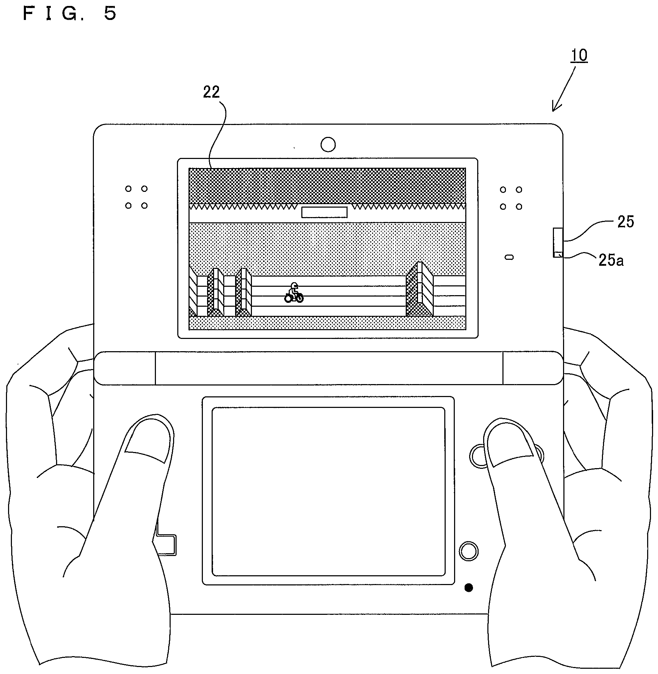

Next, operations of the game apparatus 10 will be briefly described with reference to FIG. 5 to FIG. 12. Hereinafter, a description is given of an example where the game apparatus 10 executes a game in which a rider rides a motorbike on an auto race course in accordance with operations by a user.

FIG. 5 shows an example of a game image that is displayed on the upper LCD 22 of the game apparatus 10 when the planar display mode is selected by the 3D adjustment switch 25 (i.e., a game image that is displayed when the slider 25a of the 3D adjustment switch 25 is adjusted to the third position (see FIG. 3A) by the user). The upper LCD 22 displays the rider riding the motorbike on the auto race course, obstacles on the auto race course, spectator stands, and the like.

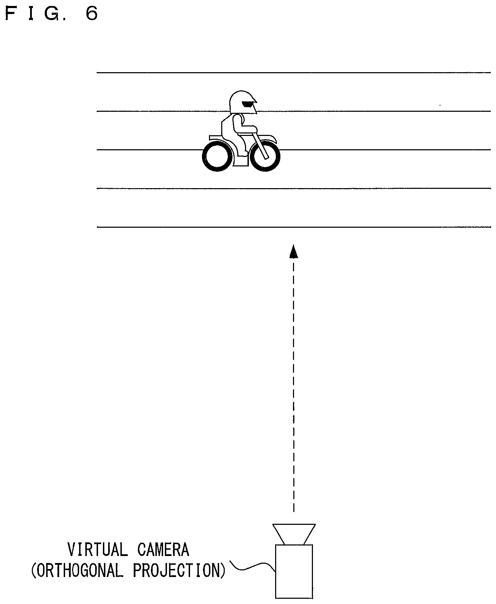

As shown in FIG. 6, in the planar display mode, a virtual space is rendered by using an orthogonal-projection virtual camera (i.e., the virtual space is projected onto a predetermined plane by orthogonal projection). In this manner, a planarly visible image is generated. The generated planarly visible image is displayed on the upper LCD 22. Such images generated by orthogonal projection were often used in video games in the past. Such images lack a sense of depth and verisimilitude.

It should be noted that, in the planar display mode, a perspective-projection virtual camera may be used. In this case, the angle of view of the perspective-projection virtual camera may be set to 0 or a value close to 0. This allows the perspective-projection virtual camera to be used as an orthogonal-projection virtual camera or a pseudo orthogonal-projection virtual camera.

In the case of upgrading an existing video game (e.g., a video game of the past) to one capable of both planar display and stereoscopic display, it is desired in the planar display to keep the way the images look in the existing video game, rather than improving the verisimilitude of the images, to allow the user to feel nostalgic.

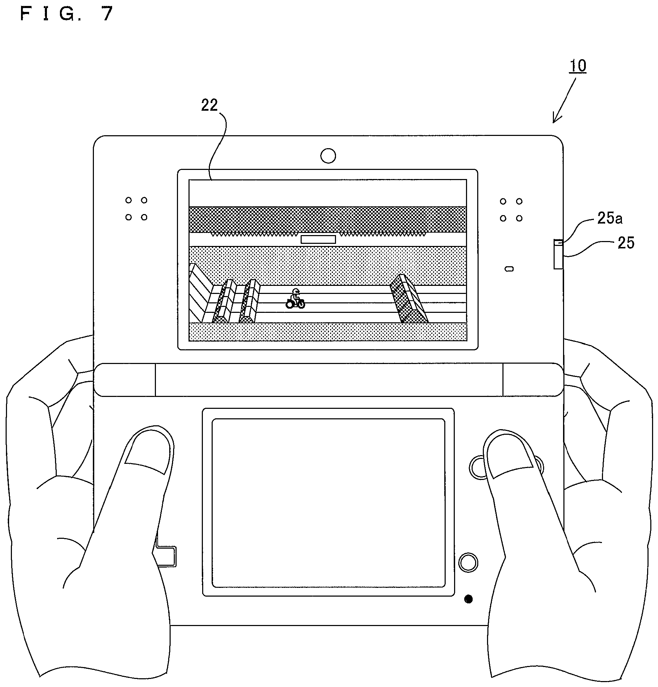

FIG. 7 shows an example of a game image that is displayed on the upper LCD 22 of the game apparatus 10 when the stereoscopic display mode is selected by the 3D adjustment switch 25 and the degree of stereopsis is set to the maximum value (i.e., a game image that is displayed when the slider 25a of the 3D adjustment switch 25 is adjusted to the second position (see FIG. 3C) by the user).

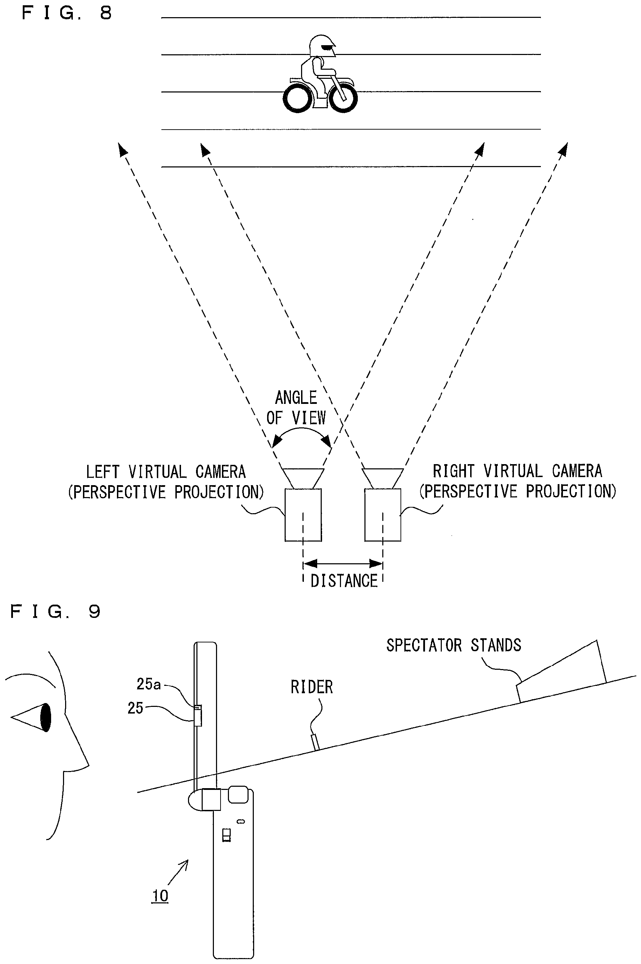

As shown in FIG. 8, in the stereoscopic display mode, two perspective-projection virtual cameras (i.e., a right virtual camera and a left virtual camera) that are placed with a distance therebetween are used to capture images of a virtual space. In this manner, two images (i.e., an image for right eye and an image for left eye) are rendered and generated. The generated image for right eye and image for left eye are combined into a stereoscopically visible image, and the stereoscopically visible image is displayed on the upper LCD 22.

As described above, in the stereoscopic display mode, the virtual space is rendered by using two virtual cameras that are placed with a distance therebetween. This generates parallax between the image for right eye and the image for left eye. As a result, the parallax allows the user feel a sense of depth as shown in FIG. 9. In the stereoscopic display mode, image rendering is performed by perspective projection. Therefore, the sense of depth and verisimilitude increase as compared to those of an image rendered by orthogonal projection.

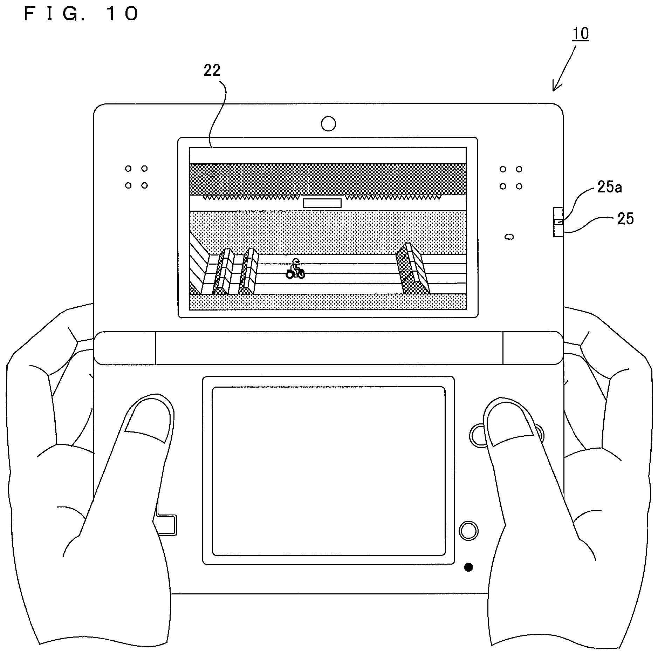

FIG. 10 shows an example of a game image that is displayed by the upper LCD 22 of the game apparatus 10 in a case where the stereoscopic display mode is selected by the 3D adjustment switch 25 and the degree of stereopsis is set to substantially the middle value between the minimum value and the maximum value (i.e., a game image that is displayed in a case where the user sets the slider 25a of the 3D adjustment switch 25 to substantially the middle position between the first position (see FIG. 3B) and the second position (FIG. 3C).

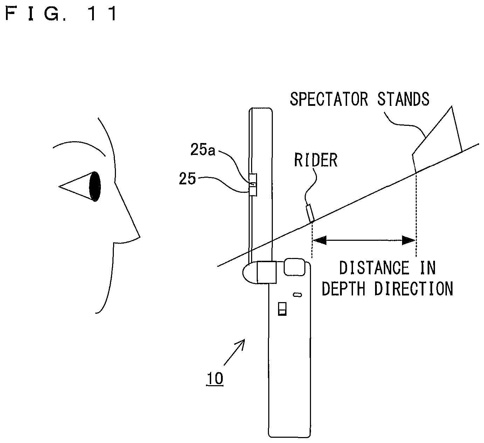

In this case, the distance between the right virtual camera and the left virtual camera and the angle of view of each virtual camera are both smaller than in a case where the degree of stereopsis is set to the maximum value. When the distance between the right virtual camera and the left virtual camera is reduced, the parallax between the image for right eye and the image for left eye is reduced, accordingly. Therefore, as shown in FIG. 11, the sense of depth the user feels owing to the parallax is reduced as compared to a case where the degree of stereopsis is set to the maximum value. Moreover, when the angle of view of each virtual camera is reduced, the sense of depth the user feels owing to the perspective projection is reduced, accordingly.

In the present embodiment, the degree of stereopsis is determined in accordance with a 3D volume value which is based on an output signal from the 3D adjustment switch 25. The 3D volume value is a real number in the range of 0.0 to 1.0, for example. When the slider 25a is in the first position (see FIG. 3B), the 3D volume value is 0.0. The closer the slider 25a is to the second position from the first position, the greater the 3D volume value. When the slider 25a is in the second position (see FIG. 3C), the 3D volume value is 1.0.

In another embodiment, the 3D volume value may be 0.0 when the slider 25a is in the third position (see FIG. 3A); the 3D volume value may be a positive value close to 0.0 when the slider 25a is in the first position (see FIG. 3B); the closer the slider 25a is to the second position (see FIG. 3C) from the first position, the greater may be the 3D volume value; and the 3D volume value may be 1.0 when the slider 25a is in the second position. In this case, when the 3D volume value is the minimum value (i.e., when the slider 25a is in the third position), the right virtual camera and the left virtual camera may be used as pseudo orthogonal-projection virtual cameras (i.e., the distance between these virtual cameras is set to 0 or a value close to 0 and the angle of view of each virtual camera is set to a value close to 0). Here, only one of the pseudo orthogonal-projection virtual cameras (i.e., one of the right virtual camera and the left virtual camera) may be used to display a planarly visible image on the upper LCD 22. Alternatively, instead of displaying a planarly visible image, a stereoscopically visible image that is similar to a planarly visible image may be generated by using both the pseudo orthogonal-projection virtual cameras (i.e., both the right virtual camera and the left virtual camera).

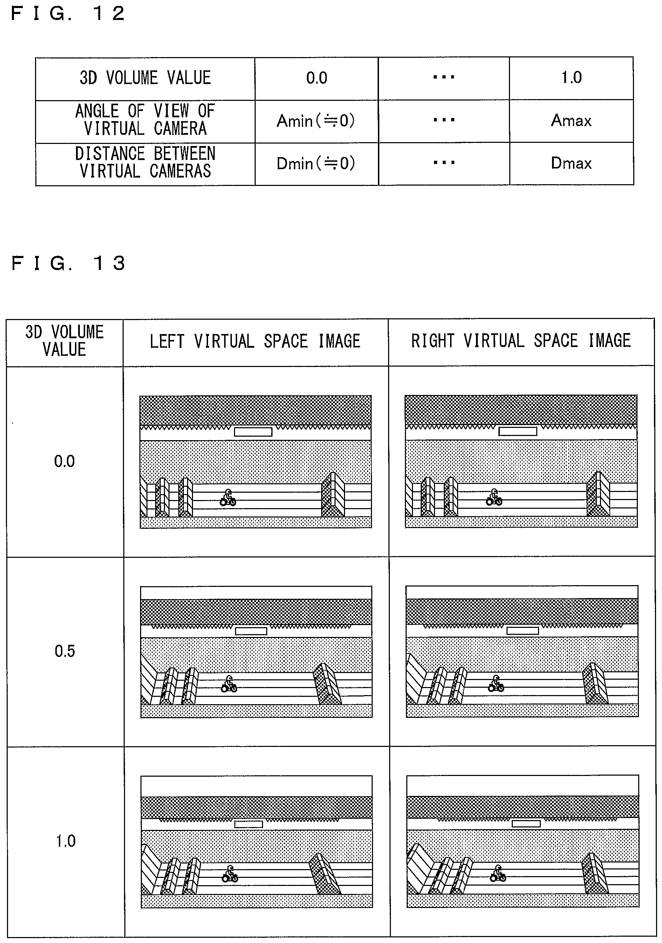

The angle of view of each of the right virtual camera and the left virtual camera and the distance between the right virtual camera and the left virtual camera are determined in accordance with the above-described 3D volume value. As shown in FIG. 12, the angle of view of each of the right virtual camera and the left virtual camera is a predetermined minimum angle of view Amin when the 3D volume value is 0.0. The greater the 3D volume value, the greater the angle of view. When the 3D volume value is 1.0, the angle of view is a predetermined maximum angle of view Amax. When the 3D volume value is 0.0, the distance between the right virtual camera and the left virtual camera is a predetermined minimum distance Dmin (which is 0 or a value close to 0). The greater the 3D volume value, the greater the distance. When the 3D volume value is 1.0, the distance is a predetermined maximum distance Dmax.

Described below is an example of formulas which are used for determining the setting of a virtual camera in accordance with the 3D volume value. In the formulas shown below, m3DVol (O.Of to 1.0f) represents the 3D volume value; mFov2Len represents a distance from a rendering target (i.e., a virtual object) to the virtual camera in a case where the 3D volume value is minimum; and mMaxFov represents the angle of view of the virtual camera in a case where the 3D volume value is maximum. It should be noted that if the angle of view of the virtual camera is simply increased, then the size of the rendering target displayed on the screen decreases. Therefore, in the present embodiment, as shown in the formulas below, the greater the angle of view of the virtual camera (i.e., an angle of view setting value shown below), the smaller the virtual camera coordinates (i.e., the virtual camera is placed closer to the rendering target). In this manner, the size of the rendering target displayed on the screen is maintained. Angle of view setting value = 1.0f+(mMaxFov×m3DVol)

$$\text{Virtual camera coordinates} = \text{mFov2Len}/\text{angle of view setting value} - ((\text{angle of view setting value} \times \text{angle of view coefficient})/\text{mFov2Len})$$

The setting of a perspective-projection virtual camera is determined based on calculation results of the above formulas.

It is desired that each of the minimum angle of view and the minimum distance is a value close to 0 so that, when the user operates the slider 25a to switch the display mode from the planar display mode to the stereoscopic display mode (or from the stereoscopic display mode to the planar display mode), the appearance of a displayed image changes smoothly. A virtual camera of which the angle of view is close to 0 may be called a pseudo orthogonal-projection virtual camera. The above effect is produced effectively by employing a switch similar to the 3D adjustment switch 25 shown in FIG. 3A to FIG. 3C, that is, a switch having characteristics similar to the following: the third position, which corresponds to the planar display mode, and the first position, at which the degree of stereopsis in the stereoscopic display mode is the minimum value, are adjacent to each other; and the more distant the slider 25a is from the third position, the greater the degree of stereopsis in the stereoscopic display mode.

It should be noted that the same perspective-projection virtual cameras may be used for both the stereoscopic display mode and the planar display mode. In this case, in the planar display mode, the angle of view of each perspective-projection virtual camera may be set to the minimum value for the purpose of using each perspective-projection virtual camera as an orthogonal-projection virtual camera or as a pseudo orthogonal-projection virtual camera. In the stereoscopic display mode, the angle of view of each perspective-projection virtual camera may be increased in accordance with an increase in the degree of stereopsis.

According to the above-described control of the angle of view and the distance, an image for left eye rendered based on the left virtual camera and an image for right eye rendered based on the right virtual camera change as shown in FIG. 13 in accordance with a change in the 3D volume value.

(Details of operations of game apparatus 10)

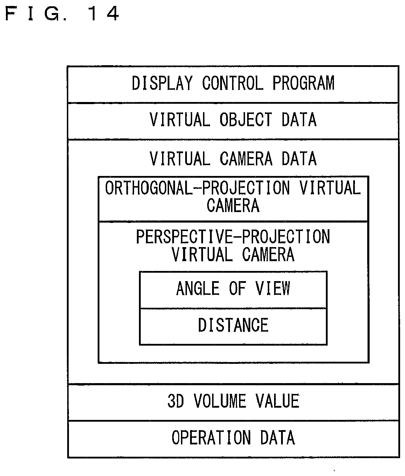

FIG. 14 shows an example of a program and data that are stored in the main memory 32 of the game apparatus 10. The main memory 32 stores a display control program, virtual object data, virtual camera data, 3D volume value, operation data, and the like.

The display control program is a program for generating a planarly visible image and a stereoscopically visible image as described above. For example, at the start of the game, the display control program is loaded from the external memory 44 or the like into the main memory 32 together with the virtual object data which is described below.

The virtual object data relates to a virtual object in a virtual space. The virtual object data indicates, for example, the shape and color of the virtual object. The virtual object data also contains data indicating the position and orientation of the virtual object in the virtual space. These data are updated at any time in accordance with the progress in the game.

The virtual camera data relates to the virtual cameras which are used to render the virtual space. The virtual camera data contains, for example, data indicating the position and orientation of each virtual camera. The virtual camera data contains data relating to an orthogonal-projection virtual camera used in generating a planarly visible image and data relating to perspective-projection virtual cameras (i.e., the right virtual camera and the left virtual camera) used in generating a stereoscopically visible image. The data relating to the perspective-projection virtual cameras contains: the angle of view of the right virtual camera and the angle of view of the left virtual camera; and the distance between the right virtual camera and the left virtual camera (or positional coordinates of the right virtual camera and positional coordinates of the left virtual camera).

As described above, the 3D volume value is obtained at any time based on an output signal from the 3D adjustment switch 25, and stored in the main memory 32.

The operation data is obtained at any time based on output signals from input devices such as the operation buttons 14, and stored in the main memory 32.

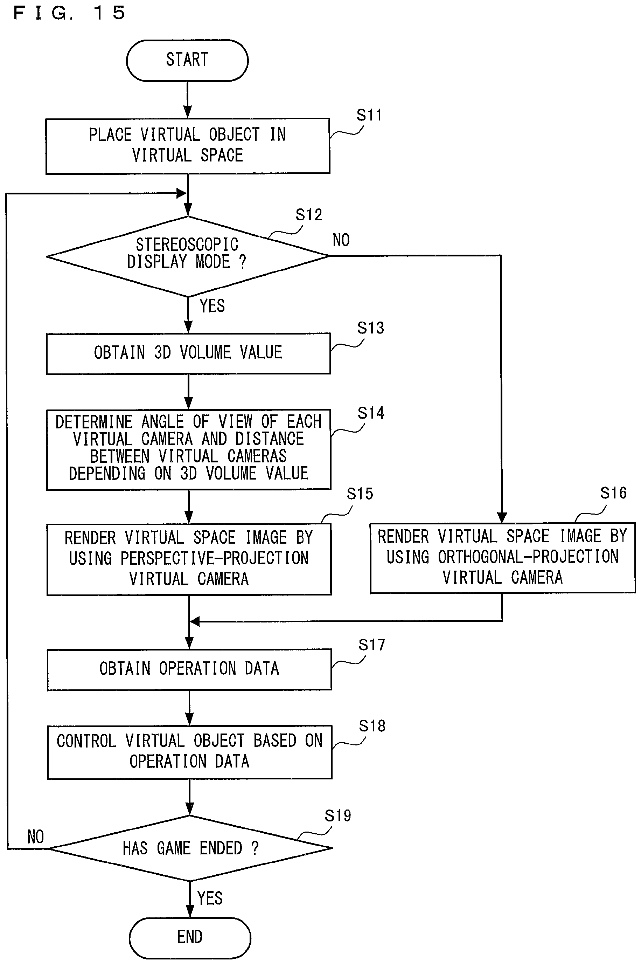

FIG. 15 is a flowchart showing a flow of processing which the CPU 311 performs based on the display control program.

First, at step S11 in FIG. 15, the CPU 311 places virtual objects (ground, obstacles, rider, and spectator stands) in the virtual space.

At step S12, the CPU 311 determines, based on an output signal from the 3D adjustment switch 25, whether the stereoscopic display mode is currently selected (i.e., whether the slider 25a is located at a position between the first position (see FIG. 3B) and the second position (see FIG. 3C)). If the stereoscopic display mode is currently selected, the processing proceeds to step S13. Otherwise (i.e., if the planar display mode is currently selected), the processing proceeds to step S16.

At step S13, the CPU 311 obtains the 3D volume value based on an output signal from the 3D adjustment switch 25.

At step S14, the CPU 311 determines, based on the obtained 3D volume value, the angle of view of each of the pair of perspective-projection virtual cameras (i.e., the right virtual camera and the left virtual camera) and the distance between the right virtual camera and the left virtual camera (or the positional coordinates of the right virtual camera and the positional coordinates of the left virtual camera). These may be determined by referring to a table as shown in FIG. 12, or by using predetermined formulas as described above.

At step S15, the CPU 311 renders images (an image for right eye and an image for left eye) by using the pair of perspective-projection virtual cameras. Typically, the GPU 312 performs this rendering process in accordance with a rendering instruction from the CPU 311. The images generated in this manner are combined as necessary and then displayed at a predetermined timing on the upper LCD 22 in a stereoscopic manner.

At step S16, the CPU 311 uses a single orthogonal-projection virtual camera to render an image. Typically, the GPU 312 performs this rendering process in accordance with a rendering instruction from the CPU 311. The image generated in this manner is displayed at a predetermined timing on the upper LCD 22 in a planar manner.

At step S17, the CPU 311 obtains operation data based on output signals from the operation buttons 14 or the like.

At step S18, the CPU 311 controls a virtual object (in the present embodiment, the rider) based on the obtained operation data.

At step S19, the CPU 311 determines whether the game has ended. If the game has ended, the execution of the display control program is ended. Otherwise, the processing returns to step S12.

(Advantageous effect of the embodiment)

As described above, according to the present embodiment, perspective-projection virtual cameras are used in the stereoscopic display mode, and an orthogonal-projection virtual camera is used in the planar display mode. Accordingly, as compared to the planar display mode, the stereoscopic effect for the user is enhanced in the stereoscopic display mode which allows the user to feel not only the sense of depth realized by parallax but also the sense of depth realized by perspective projection.

Further, according to the present embodiment, in the stereoscopic display mode, the angle of view of each virtual camera changes in accordance with the degree of stereopsis (i.e., in accordance with the position of the slider 25a). This allows the user to feel, when the degree of stereopsis changes, not only a change in the sense of depth realized by parallax but also a change in the sense of depth realized by perspective projection. In this manner, changes in the stereoscopic effect can be accentuated.

Still further, according to the present embodiment, the perspective-projection virtual cameras may be used in both the stereoscopic display mode and the planar display mode. In the planar display mode, by setting the angle of view of each perspective-projection virtual camera to the minimum value, each perspective-projection virtual camera can be used as an orthogonal-projection virtual camera or a pseudo orthogonal-projection virtual camera. In the stereoscopic display mode, the angle of view of each perspective-projection virtual camera is increased in accordance with an increase in the degree of stereopsis. This allows the user to feel, when the degree of stereopsis changes, not only a change in the sense of depth realized by parallax (i.e., the distance between the left and right virtual cameras) but also a change in the sense of depth realized by the angle of view of each perspective-projection virtual camera. In this manner, changes in the stereoscopic effect can be accentuated.

(Variations)

The above embodiment describes an example where the virtual space is rendered by using an orthogonal-projection virtual camera in the planar display mode. However, in another embodiment, in the planar display mode, the virtual space may be rendered by using a perspective-projection virtual camera of which the angle of view is similar to one for orthogonal projection (i.e., a pseudo orthogonal-projection virtual camera). Moreover, in the planar display mode, the distance between a pair of virtual cameras used in the stereoscopic display mode may be set to 0 (i.e., the positional coordinates of the right virtual camera and the positional coordinates of the left virtual camera may be set to be identical with each other). Then, only one of these virtual cameras may be used to render the virtual space.

Further, the above embodiment describes an example where a pair of perspective-projection virtual cameras is used in the stereoscopic display mode. However, in another embodiment, a single perspective-projection virtual camera may be used in the stereoscopic display mode in such a manner that the position of the single perspective-projection virtual camera is moved as necessary to render two images (i.e., an image for right eye and an image for left eye), the respective viewpoints of which are different from each other.

Still further, the above embodiment describes an example where the virtual cameras are switched between the orthogonal-projection type used in the planar display mode and the perspective-projection type used in the stereoscopic display mode (i.e., switching between two types of cameras). However, the present invention is not limited thereto. Without switching the virtual cameras, changing virtual camera parameters (e.g., the angle of view and the like) between the planar display mode and the stereoscopic display mode will suffice. This allows the sense of depth realized by parallax to be changed between the planar display mode and the stereoscopic display mode, and in addition, allows the appearance of a displayed image to be changed in accordance with the virtual camera parameters. Alternatively, multiple types of perspective-projection virtual cameras, each type having a different angle of view, may be prepared. Based on an obtained 3D volume value, a corresponding type of perspective-projection virtual camera may be set.

Still further, the above embodiment describes an example where the game, which the user plays by operating a rider, is executed. However, in another embodiment, any application software that is not game software may be executed.

Still further, the above embodiment describes an example where a CPU (i.e., the CPU 311) performs processing of the display control program. However, in another embodiment, at least a part of the processing of the display control program may be realized solely by hardware components.

Still further, the above embodiment describes a handheld game apparatus which includes a display device (i.e., the upper LCD 22) capable of stereoscopic display. However, in another embodiment, any information processing apparatus or system (e.g., a stationary game apparatus, desktop PC, laptop PC, or mobile phone) capable of outputting image signals to a display device capable of stereoscopic display may be used.

Still further, the above embodiment describes an example where a single CPU (i.e., the CPU 311) performs processing of the display control program. However, in another embodiment, the processing of the display control program may be distributed to a plurality of processors. The plurality of processors may be included in a single information processing apparatus (or system), or may be separately provided in a plurality of information processing apparatuses (or systems), respectively, such as a server apparatus and a client apparatus.

While the invention has been described in detail, the foregoing description is in all aspects illustrative and not restrictive. It will be understood that numerous other modifications and variations can be devised without departing from the scope of the invention, as defined by the appended set of claims.

**Claims**

1. A display control program for causing a computer (311) of a display control apparatus (10) to act as:

   adjustment means (311, S 13) for adjusting by a user a distance between a pair of virtual cameras;
   virtual camera control means (311, S 14) for setting an angle of view of each virtual camera in accordance with the distance between the pair of virtual cameras adjusted by the adjustment means; and
   rendering means (311, S15) for rendering a virtual object placed in a virtual space, based on the virtual cameras of which the angle of view has been set by the virtual camera control means.

2. The display control program according to claim 1, wherein:

   the virtual camera control means

      sets the angle of view of the virtual cameras to a first angle of view if the distance between the pair of virtual cameras is adjusted to a first value by the adjustment means, and
      sets the angle of view of the virtual cameras to a second angle of view if the distance between the pair of virtual cameras is adjusted to a second value by the adjustment means; and

   the rendering means

      renders a stereoscopically visible image if the distance between the pair of virtual cameras is set to the first value by the adjustment means, and
      renders a planarly visible image if the distance between the pair of virtual cameras is set to the second value by the adjustment means.

3. The display control program according to claim 2, wherein the first value is greater than the second value, and the first angle of view is greater than the second angle of view.

4. The display control program according to any one of claims 1 to 3, wherein the virtual camera control means increases the angle of view of each virtual camera in accordance with an increase in the distance between the pair of virtual cameras adjusted by the adjustment means.

5. The display control program according to any one of claims 1 to 4, wherein
   the rendering means renders a stereoscopically visible image by rendering, based on the pair of virtual cameras, an image for left eye and an image for right eye, in each of which the virtual object is captured.

6. The display control program according to claim 5, wherein
   the pair of virtual cameras are each a perspective-projection virtual camera, and

if the distance between the pair of virtual cameras is adjusted to a minimum value by the adjustment means, the virtual camera control means sets the angle of view of each of the pair of perspective-projection virtual cameras to a minimum value such that the angle of view is set close to an angle of view for orthogonal projection, and sets the distance between the pair of perspective-projection virtual cameras to zero or a value close to zero.

7. The display control program according to claim 1, wherein the virtual camera control means changes a distance from the virtual object to the virtual cameras in accordance with the distance between the pair of virtual cameras adjusted by the adjustment means.

8. The display control program according to claim 7, wherein the virtual camera control means moves the virtual cameras, such that the greater the distance between the pair of virtual cameras adjusted by the adjustment means, the closer the virtual cameras are to the virtual object.

9. A display control method comprising:

an adjustment step (S13) of adjusting; by a user a distance between a pair of virtual cameras;
a virtual camera control step (S 14) of setting an angle of view of each virtual camera in accordance with the distance between the pair of virtual cameras adjusted in the adjustment step; and
a rendering step (S 15) of rendering a virtual object placed in a virtual space, based on the virtual cameras of which the angle of view has been set in the virtual camera control step.

10. A display control system comprising:

adjustment means (311, S13) for adjusting by a user a distance between a pair of virtual cameras;
virtual camera control means (311, S 14) for setting an angle of view of each virtual camera in accordance with the distance between the pair of virtual cameras adjusted by the adjustment means; and
rendering means (311, S15) for rendering a virtual object placed in a virtual space, based on the virtual cameras of which the angle of view has been set by the virtual camera control means.

**Patentansprüche**

1. Anzeigesteuerungsprogramm zum Veranlassen eines Computers (311) eines Anzeigesteuergeräts (10), zu wirken als:

Einstellmittel (311, S 13) zum Einstellen eines Abstands zwischen einem Paar virtueller Kameras durch einen Benutzer;
virtuelles Kamerasteuerungsmittel (311, S 14) zum Einstellen eines Blickwinkels jeder virtuellen Kamera gemäß dem durch das Einstellmittel eingestellten Abstand zwischen dem Paar virtueller Kameras; und
Rendering-Mittel (311, S15) zum Rendern eines virtuellen Objekts, das in einem virtuellen Raum platziert ist, basierend auf den virtuellen Kameras, deren Blickwinkel durch das virtuelle Kamerasteuerungsmittel eingestellt wurde.

2. Anzeigesteuerungsprogramm nach Anspruch 1, wobei:

das virtuelle Kamerasteuerungsmittel

den Blickwinkel der virtuellen Kameras auf einen ersten Blickwinkel einstellt, wenn der Abstand zwischen dem Paar virtueller Kameras durch das Einstellmittel auf einen ersten Wert eingestellt ist, und
den Blickwinkel der virtuellen Kameras auf einen zweiten Blickwinkel einstellt, wenn der Abstand zwischen dem Paar virtueller Kameras durch das Einstellmittel auf einen zweiten Wert eingestellt ist; und

das Rendering-Mittel

ein stereoskopisch sichtbares Bild rendert, wenn der Abstand zwischen dem Paar virtueller Kameras mit dem Einstellmittel auf den ersten Wert eingestellt ist, und
ein planar sichtbares Bild rendert, wenn der Abstand zwischen dem Paar virtueller Kameras mit dem Einstellmittel auf den zweiten Wert eingestellt ist.

3. Anzeigesteuerungsprogramm nach Anspruch 2, wobei der erste Wert größer als der zweite Wert ist und der erste Blickwinkel größer als der zweite Blickwinkel ist.

4. Anzeigesteuerungsprogramm nach einem der Ansprüche 1 bis 3, wobei das virtuelle Kamerasteuerungsmittel den Blickwinkel jeder virtuellen Kamera gemäß einer Vergrößerung des durch das Einstellmittel eingestellten Abstands zwischen dem Paar virtueller Kameras vergrößert.

5. Anzeigesteuerungsprogramm nach einem der Ansprüche 1 bis 4, wobei
das Rendering-Mittel, basierend auf dem Paar virtueller Kameras, durch Rendern eines Bildes für das linke Auge und eines Bildes für das rechte Auge, in dem jeweils das virtuelle Objekt erfasst wird, ein stereoskopisch sichtbares Bild rendert.

6. Anzeigesteuerungsprogramm nach Anspruch 5, wobei

das Paar virtueller Kameras jeweils eine virtuelle Kamera mit perspektivischer Projektion ist, und
wenn der Abstand zwischen dem Paar virtueller Kameras durch das Einstellmittel auf einen Mindestwert eingestellt ist, das virtuelle Kamerasteuerungsmittel den Blickwinkel jeder des Paars virtueller Kameras mit perspektivischer Projektion auf einen Mindestwert einstellt, so dass der Blickwinkel nahe an einem Blickwinkel für orthogonale Projektion eingestellt ist, und den Abstand zwischen dem Paar virtueller Kameras mit perspektivischer Projektion auf Null oder einen Wert nahe Null einstellt.

7. Anzeigesteuerungsprogramm nach Anspruch 1, wobei das virtuelle Kamerasteuerungsmittel einen Abstand von dem virtuellen Objekt zu den virtuellen Kameras gemäß dem durch das Einstellmittel eingestellten Abstand zwischen dem Paar virtueller Kameras ändert.

8. Anzeigesteuerungsprogramm nach Anspruch 7, wobei das virtuelle Kamerasteuerungsmittel die virtuellen Kameras bewegt, so dass die virtuellen Kameras umso näher an dem virtuellen Objekt sind, je größer der durch das Einstellmittel eingestellte Abstand zwischen dem Paar virtueller Kameras ist.

9. Anzeigesteuerungsverfahren, umfassend:

Einstellschritt (S13) zum Einstellen eines Abstands zwischen einem Paar virtueller Kameras durch einen Benutzer;
Schritt zur virtuellen Kamerasteuerung (S 14) zum Einstellen eines Blickwinkels jeder virtuellen Kamera gemäß dem durch das Einstellmittel eingestellten Abstand zwischen dem Paar virtueller Kameras; und
Rendering-Schritt (S 15) zum Rendern eines virtuellen Objekts, das in einem virtuellen Raum platziert ist, basierend auf den virtuellen Kameras, deren Blickwinkel im Schritt zur virtuellen Kamerasteuerung eingestellt wurde.

10. Anzeigesteuerungssystem, umfassend:

Einstellmittel (311, S 13) zum Einstellen eines Abstands zwischen einem Paar virtueller Kameras durch einen Benutzer;
virtuelles Kamerasteuerungsmittel (311, S 14) zum Einstellen eines Blickwinkels jeder virtuellen Kamera gemäß dem durch das Einstellmittel eingestellten Abstand zwischen dem Paar virtueller Kameras; und
Rendering-Mittel (311, S15) zum Rendern eines virtuellen Objekts, das in einem virtuellen Raum platziert ist, basierend auf den virtuellen Kameras, deren Blickwinkel durch das virtuelle Kamerasteuerungsmittel eingestellt wurde.

**Revendications**

1. Un programme de contrôle d'affichage pour faire en sorte qu'un calculateur (311) d'un appareil de contrôle d'affichage (10) fasse fonction :

d'un moyen d'ajustement (311, S13) pour l'ajustement par un utilisateur d'une distance entre une paire de caméras virtuelles ;
d'un moyen de contrôle de caméra virtuelle (311, S14) pour le paramétrage d'un angle de vision de chaque caméra virtuelle en fonction de la distance entre la paire de caméras virtuelles ajustée par le moyen d'ajustement ; et

d'un moyen de restitution (311, S15) pour la restitution d'un objet virtuel, placé dans un espace virtuel, sur la base des caméras virtuelles dont l'angle de vision a été paramétré par le moyen de contrôle de caméra virtuelle.

2. Le programme de contrôle d'affichage selon la revendication 1, dans lequel :

le moyen de contrôle de caméra virtuelle

paramètre l'angle de vision des caméras virtuelles sur un premier angle de vision si la distance entre la paire de caméras virtuelles est ajustée à une première valeur par le moyen d'ajustement, et paramètre l'angle de vision des caméras virtuelles à un second angle de vision si la distance entre la paire de caméras virtuelles est ajustée à une seconde valeur par le moyen d'ajustement ; et

le moyen de restitution

restitue une image visible en stéréoscopie si la distance entre la paire de caméras virtuelles est paramétrée à la première valeur par le moyen d'ajustement, et restitue une image visible plate si la distance entre la paire de caméras virtuelles est paramétrée à la seconde valeur par le moyen d'ajustement.

3. Le programme de contrôle d'affichage selon la revendication 2, dans lequel la première valeur est supérieure à la seconde valeur, et le premier angle de vision est supérieur au second angle de vision.

4. Le programme de contrôle d'affichage selon l'une des revendications 1 à 3, dans lequel le moyen de contrôle de caméra virtuelle augmente l'angle de vision de chaque caméra virtuelle en fonction d'une augmentation de la distance entre la paire de caméras virtuelles ajustée par le moyen d'ajustement.

5. Le programme de contrôle d'affichage selon l'une des revendications 1 à 4, dans lequel le moyen de restitution restitue une image visible en stéréoscopie par restitution, sur la base de la paire de caméras virtuelles, d'une image pour l'œil gauche et d'un image pour l'œil droit dans chacune de laquelle est capturé l'objet virtuel.

6. Le programme de contrôle d'affichage selon la revendication 5, dans lequel les caméras virtuelles de la paire sont chacune une caméra virtuelle à projection de perspective, et si la distance entre la paire de caméras virtuelles est ajustée à une valeur minimale par le moyen d'ajustement, le moyen de communication de caméra virtuelle paramètre l'angle de vision de chacune de la paire de caméras virtuelles à projection de perspective à une valeur minimale de manière à paramétrer l'angle de vision proche d'un angle de vision pour projection orthogonale, et paramètre à zéro ou à une valeur proche de zéro la distance entre la paire de caméras virtuelles à projection de perspective.

7. Le programme de contrôle d'affichage selon la revendication 1, dans lequel le moyen de contrôle de caméra virtuelle modifie une distance entre l'objet virtuel et les caméras virtuelles en fonction de la distance entre la paire de caméras virtuelles qui a été ajustée par le moyen d'ajustement.

8. Le programme de contrôle d'affichage selon la revendication 7, dans lequel le moyen de contrôle de caméra virtuelle déplace les caméras virtuelles de telle sorte que les caméras virtuelles soient d'autant plus proches de l'objet virtuel que la distance entre la paire de caméras virtuelles ajustée par le moyen d'ajustement est grande.

9. Un procédé de contrôle d'affichage comprenant :

une étape d'ajustement (S13), pour l'ajustement par un utilisateur d'une distance entre une paire de caméras virtuelles ;
une étape de contrôle de caméra virtuelle (S14), pour le paramétrage d'un angle de vision de chaque caméra virtuelle en fonction de la distance entre la paire de caméras virtuelles ajustée à l'étape d'ajustement ; et
une étape de restitution (S15), pour la restitution d'un objet virtuel, placé dans un espace virtuel, sur la base des caméras virtuelles dont l'angle de vision a été paramétré à l'étape de contrôle de caméra virtuelle.

**10.** Un système de contrôle d'affichage comprenant :

un moyen d'ajustement (311, S13) pour l'ajustement par un utilisateur d'une distance entre une paire de caméras virtuelles ;

d'un moyen de contrôle de caméra virtuelle (311, S14) pour le paramétrage d'un angle de vision de chaque caméra virtuelle en fonction de la distance entre la paire de caméras virtuelles ajustée par le moyen d'ajustement ; et

d'un moyen de restitution (311, S15) pour la restitution d'un objet virtuel, placé dans un espace virtuel, sur la base des caméras virtuelles dont l'angle de vision a été paramétré par le moyen de contrôle de caméra virtuelle.

F I G. 1

F I G. 2 A

F I G. 2 B

F I G.  2 C

14H

16B

19

25

25a

y

z

x

21    11

F I G.  2 D

14H          11D          14G

17    11

y

x    z

F I G. 3 A

25 25a

(THIRD POSITION)

F I G. 3 B

25 25a

(FIRST POSITION)

F I G. 3 C

25 25a

(SECOND POSITION)

FIG. 4

| 32 | MAIN MEMORY | |
|---|---|---|

31 INFORMATION PROCESSING SECTION

OPERATION BUTTONS 14

33 EXTERNAL MEMORY I/F

311 CPU

ANALOG STICK 15

44 EXTERNAL MEMORY

LOWER LCD 12

34 EXTERNAL DATA STORAGE MEMORY I/F

312 GPU

UPPER LCD 22

45 EXTERNAL DATA STORAGE MEMORY

313 VRAM

23

OUTER IMAGING SECTION (LEFT) 23a

35 INTERNAL DATA STORAGE MEMORY

OUTER IMAGING SECTION (RIGHT) 23b

36 WIRELESS COMMUNICATION MODULE

INNER IMAGING SECTION 24

37 LOCAL COMMUNICATION MODULE

3D ADJUSTMENT SWITCH 25

38 RTC

13 TOUCH PANEL

39 ACCELERATION SENSOR

I/F CIRCUIT

16 LEDs

41

42 MICROPHONE

26 3D INDICATOR

43 SPEAKER

POWER SUPPLY CIRCUIT 40

23

F I G. 5

F I G. 6

VIRTUAL CAMERA
(ORTHOGONAL PROJECTION)

F I G. 7

FIG. 8

ANGLE
OF VIEW

LEFT VIRTUAL CAMERA
(PERSPECTIVE PROJECTION)

RIGHT VIRTUAL CAMERA
(PERSPECTIVE PROJECTION)

DISTANCE

FIG. 9

SPECTATOR STANDS

25a

25

RIDER

10

F I G. 1 0

FIG. 11

SPECTATOR STANDS

25a

25

RIDER

DISTANCE IN
DEPTH DIRECTION

10

F I G. 1 2

| 3D VOLUME VALUE | 0.0 | ・・・ | 1.0 |
|---|---|---|---|
| ANGLE OF VIEW OF VIRTUAL CAMERA | Amin(≒0) | ・・・ | Amax |
| DISTANCE BETWEEN VIRTUAL CAMERAS | Dmin(≒0) | ・・・ | Dmax |

F I G. 1 3

| 3D VOLUME VALUE | LEFT VIRTUAL SPACE IMAGE | RIGHT VIRTUAL SPACE IMAGE |
|---|---|---|
| 0.0 | | |
| 0.5 | | |
| 1.0 | | |

FIG. 14

| DISPLAY CONTROL PROGRAM |
|---|
| VIRTUAL OBJECT DATA |
| VIRTUAL CAMERA DATA<br><br>ORTHOGONAL-PROJECTION VIRTUAL CAMERA<br><br>PERSPECTIVE-PROJECTION VIRTUAL CAMERA<br><br>ANGLE OF VIEW<br><br>DISTANCE |
| 3D VOLUME VALUE |
| OPERATION DATA |

F I G. 1 5

```
                    ┌─────────────┐
                    │    START    │
                    └──────┬──────┘
                           │
                           ▼
        ┌──────────────────────────────────┐  S11
        │   PLACE VIRTUAL OBJECT IN         │
        │        VIRTUAL SPACE              │
        └──────────────┬───────────────────┘
                       │
          ┌────────────┼─────────────────────────────────┐
          │            ▼                                  │
          │      ╱─────────────╲  S12                     │
          │     ╱  STEREOSCOPIC ╲        NO               │
          │    ╱  DISPLAY MODE ?  ╲──────────────┐        │
          │     ╲               ╱                │        │
          │      ╲─────────────╱                 │        │
          │            │ YES                      │        │
          │            ▼                          │        │
          │   ┌──────────────────────┐  S13       │        │
          │   │ OBTAIN 3D VOLUME VALUE│            │        │
          │   └──────────┬───────────┘            │        │
          │              ▼                         │        │
          │   ┌──────────────────────────┐ S14     │        │
          │   │ DETERMINE ANGLE OF VIEW   │        │        │
          │   │ OF EACH VIRTUAL CAMERA    │        │        │
          │   │ AND DISTANCE BETWEEN      │        │        │
          │   │ VIRTUAL CAMERAS DEPENDING │        │        │
          │   │ ON 3D VOLUME VALUE        │        │        │
          │   └──────────┬───────────────┘        │        │
```

OBTAIN 3D VOLUME VALUE — S13

DETERMINE ANGLE OF VIEW OF EACH VIRTUAL CAMERA AND DISTANCE BETWEEN VIRTUAL CAMERAS DEPENDING ON 3D VOLUME VALUE — S14

RENDER VIRTUAL SPACE IMAGE BY USING PERSPECTIVE-PROJECTION VIRTUAL CAMERA — S15

RENDER VIRTUAL SPACE IMAGE BY USING ORTHOGONAL-PROJECTION VIRTUAL CAMERA — S16

OBTAIN OPERATION DATA — S17

CONTROL VIRTUAL OBJECT BASED ON OPERATION DATA — S18

HAS GAME ENDED ? — S19

NO

YES

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010294536 A
- JP 2003107603 A

- EP 0751689 A2